# FASCICULE DE BREVET EUROPEEN

(11) **EP 4 076 900 B1**
(45) Date de publication et mention de la délivrance du brevet: **31.01.2024**
(21) Numéro de dépôt: 20824246.1
(22) Date de dépôt: 16.12.2020
(51) Int. Cl.: B29C 49/42, B29C 49/64, B29C 49/06, B29C 49/36, B29K 67/00, B29L 31/00

(54) **PROCEDE D'INDEXATION ANGULAIRE D'UNE PREFORME**
VERFAHREN ZUR WINKELINDEXIERUNG EINER VORFORM
METHOD FOR ANGULAR INDEXING OF A PREFORM

(30) Priorité: 17.12.2019 FR 1914558
(43) Date de publication de la demande: 26.10.2022
(73) Titulaire: Sidel Participations, 76930 Octeville-sur-Mer (FR)
(72) Inventeur: BOURVELLEC, Loïc, 76930 Octeville-sur-Mer (FR); PASQUIER, Hervé, 76930 Octeville-sur-Mer (FR); MOUCHELET, Marc, 76930 Octeville-sur-Mer (FR); PROTAIS, Pierrick, 76930 Octeville-sur-Mer (FR)
(74) Mandataire: Sidel Group
(86) Numéro de dépôt international: PCT/EP2020/086376
(87) Numéro de publication internationale: WO 2021/122712

(56) Documents cités:
- DE-A1-102011 075 171
- FR-A1- 3 001 912
- US-A- 5 853 775
- US-A1- 2012 089 252

## Description

### Domaine technique de l'invention

L'invention concerne un procédé d'indexation angulaire d'une préforme qui comporte un corps et un col, le procédé comportant :
- une étape de marquage du col de la préforme qui consiste à réaliser au moins un repère sur le col de la préforme ;
- une étape de prise en charge de la préforme par une station de chauffage, pendant laquelle la préforme est transportée le long d'un trajet de chauffage par un organe de support, appelé tournette, qui permet de faire tourner la préforme autour de son axe, et pendant laquelle le corps de la préforme est chauffé. L'invention concerne aussi une station de chauffage pour la mise en oeuvre d'un tel procédé. De tels procédés sont décrits dans le documents brevets US2012/089252A1, DE102011075171A1 et FR3001912A1.

### Arrière-plan technique

Il est connu de réaliser des récipients en matériau thermoplastique et notamment en polyéthylène téréphtalate (PET) par soufflage de préformes dont le corps est préalablement chauffé. Les préformes présentent un col qui est déjà moulé à sa forme définitive et qui est donc destiné à demeurer inchangé durant la production du récipient.

Dans de nombreux cas, les préformes sont fabriquées par injection en un premier endroit et sont moulées par soufflage à la forme définitive du récipient en un second endroit sur une installation de fabrication spécifique. Une telle technologie permet de procéder à l'opération de moulage par soufflage le plus près possible du lieu d'embouteillage, l'opération d'injection pouvant être effectuée en n'importe quel endroit. En effet, il est relativement aisé et peu coûteux de transporter des préformes de taille réduite, tandis que transporter des récipients après soufflage présente l'inconvénient d'être économiquement peu rentable du fait de leur volume très important.

La production en grande série de tels récipients est réalisée dans une installation de fabrication de récipients.

Pour permettre son formage, le corps de la préforme est chauffé au-delà d'une température de transition vitreuse permettant de rendre la paroi du corps malléable en réduisant sensiblement sa limite d'élasticité. Au contraire, le col est maintenu à une température inférieure à la température de transition vitreuse pour éviter sa déformation. A cet effet, l'installation de fabrication comporte, une station de chauffage qui permet de chauffer le corps des préformes à la température requise pour réaliser l'étape de formage.

Puis les préformes ainsi chauffées sont ensuite acheminées jusqu'à une station de soufflage de l'installation de fabrication. La station de soufflage est équipée de nombreux postes de soufflage dont chacun comporte un moule et une tuyère de soufflage ou d'étirage-soufflage. Le grand nombre de postes de soufflage permet de produire les récipients à une cadence élevée, par exemple supérieure ou égale à 50 000 bouteilles par heure. Les postes de soufflage sont par exemple portés par un carrousel qui tourne de manière que les préformes soient soufflées les unes après les autres à grande cadence pendant leur déplacement entre un point d'introduction correspondant à l'introduction des préformes dans un moule associé, et un point de démoulage correspondant à l'éjection des récipients formés à l'extérieur des moules.

Les récipients ainsi obtenus sont réceptionnés à leur sortie de moule par des moyens de préhension d'une roue de transfert afin qu'ils soient acheminés à la file vers un autre dispositif via, par exemple, un convoyeur. La station suivante est par exemple une station de remplissage des récipients ou une station d'étiquetage des récipients.

Il est parfois nécessaire de modifier l'orientation angulaire des préformes ou des récipients durant leur déplacement.

Une telle modification de l'orientation angulaire est par exemple nécessaire lorsque les récipients présentent au moins un tronçon qui n'est pas axisymétrique par rapport à l'axe du col.

Pour obtenir de tels récipients non axisymétriques, les préformes sont généralement chauffées de manière préférentielle sur certaines parties, selon un procédé généralement appelé "chauffe préférentielle". Les préformes sont ensuite reçues dans des moules avec une orientation bien déterminées autour de son axe principal pour faire correspondre le profil de chauffe des corps avec l'empreinte du récipient non axisymétrique à obtenir.

En outre, les récipients non axisymétriques ainsi obtenus doivent être présentés avec une orientation bien définie dans un dispositif d'étiquetage aval afin qu'une étiquette soit appliquée sur une face de réception réservée à cet effet sur le récipient non axisymétrique.

Une telle modification de l'orientation angulaire est aussi nécessaire dans d'autres configurations, par exemple sur certains récipients, axisymétriques ou non, qui sont destinés à être équipés de pistolets pulvérisateurs qui doivent être orientés correctement par rapport à une étiquette du récipient.

Les stations sont généralement elles-mêmes équipées de dispositifs de transport des récipients, tels que des carrousels. La modification de l'orientation angulaire du récipient peut intervenir directement sur ces dispositifs de transport et/ou sur des dispositifs de transfert entre deux stations.

Afin de permettre la bonne orientation des préformes et/ou des récipients, il est connu d'équiper le col des préformes avec un repère qui permet de réaliser leur orientation angulaire autour de l'axe du col par rapport à un support. Le col conservant sa forme durant le procédé de réalisation du récipient, ce repère demeure utilisable pour permettre l'orientation du récipient fini autour de l'axe de son col.

Ce repère permet de déterminer l'orientation angulaire de la préforme ou du récipient par rapport à son support, et éventuellement de modifier l'orientation angulaire de la préforme ou du support pour amener le repère dans une position de référence déterminée par rapport au support.

Un tel repère est généralement réalisé lors du moulage par injection de la préforme. Il s'agit par exemple d'une entaille réalisée dans une collerette du col, ou encore d'un ergot réalisé dans une gorge située au-dessus de la collerette. La préforme est ainsi déjà équipée de son repère avant d'alimenter l'installation de fabrication de récipients.

Cependant une telle préforme implique d'indexer une première fois l'orientation de la préforme lorsqu'elle est prise en charge par la station de chauffage afin de faire correspondre le profil de chauffe avec le repère qui équipe déjà la préforme. L'orientation de la préforme doit ensuite être vérifiée et corrigée une nouvelle fois lorsqu'elle est prise en charge par la station de soufflage pour que le profil de chauffe corresponde bien à l'empreinte du moule.

Or, lorsque la préforme est prise en charge dans la station de chauffage avec une erreur d'indexation angulaire, son profil de chauffe ne coïncide plus avec son repère. Cette erreur se répercute dans le moule, puisque l'orientation de la préforme dans le moule est déterminée grâce à son repère.

### Résumé de l'invention

L'invention propose un procédé d'indexation angulaire d'une préforme qui comporte un corps et un col, le procédé comportant :
- une étape de marquage du col de la préforme qui consiste à réaliser au moins un repère sur le col de la préforme ;
- une étape de prise en charge de la préforme par une station de chauffage, pendant laquelle la préforme est transportée le long d'un trajet de chauffage par un organe de support, appelé tournette, qui permet de faire tourner la préforme autour de son axe;
caractérisé en ce que l'étape de marquage est réalisée pendant l'étape de prise en charge, lorsque la préforme est portée par une tournette. Selon d'autres caractéristiques du procédé réalisé, séparément ou en combinaison, selon les enseignements de l'invention :
- le corps de la préforme est chauffé pendant une phase de chauffage comprise dans l'étape de prise en charge,
- le trajet de chauffage comporte au moins un tronçon actif le long duquel le corps de la préforme est exposé directement à un rayonnement chauffant et au moins un tronçon passif le long duquel le corps de la préforme n'est pas exposé à un rayonnement chauffant, l'étape de marquage étant réalisée lorsque la préforme est située sur le tronçon passif ;
- l'étape de marquage comporte au moins une opération de réalisation d'un repère qui consiste à exposer une zone angulaire déterminée d'une face externe du col à un faisceau laser suffisamment puissant pour marquer localement le col de la préforme ;
- l'étape de marquage comporte au moins une opération de réalisation d'un repère qui consiste à imprimer le repère sur une face externe du col avec une substance marquante, telle que de l'encre ;
- la rotation de la préforme autour de son axe est interrompue pendant chaque opération de marquage ;
- l'opération de marquage est réalisée pendant que la préforme est en rotation autour de son axe ;
- l'étape de marquage comporte au moins deux opérations de réalisation de repères en deux zones angulaires distinctes du col ;
- le procédé comporte une étape d'installation de la préforme chaude dans un moule de formage à l'issue de l'étape de prise en charge par la station de chauffage, la préforme étant orientée dans une position angulaire de référence par rapport au moule à l'aide des repères réalisés pendant l'étape de marquage. L'invention concerne aussi une station de chauffage pour la mise en oeuvre du procédé réalisé selon les enseignements de l'invention, la station de chauffage comportant :
- un dispositif de transport de préformes comportant une chaîne de tournettes pour déplacer les préformes le long d'un trajet de chauffage ;
- des organes de chauffage des préformes qui sont agencés le long d'au moins un premier tronçon actif amont du trajet de chauffage, au moins un tronçon passif du trajet de chauffage n'étant pas exposé à des organes de chauffage ;
caractérisée en ce que la station de chauffage comporte au moins un dispositif de marquage qui est agencé le long de l'au moins un tronçon passif.

Selon d'autres caractéristiques de la station de chauffage réalisée selon les enseignements de l'invention :
- le dispositif de marquage comporte un émetteur laser et qui est agencé de manière à émettre un faisceau laser en direction du col d'une préforme portée par une tournette située sur l'au moins un tronçon passif ;
- le dispositif de marquage comporte une tête d'impression qui est agencée de manière à imprimer le repère sur le col d'une préforme portée par une tournette située sur l'au moins un tronçon passif ;
- le trajet de chauffage comporte un deuxième tronçon actif aval, au moins un tronçon passif étant interposé entre les deux tronçons actifs, l'au moins un dispositif de marquage étant agencé le long dudit tronçon passif ;

- le trajet de chauffage comporte au moins un tronçon passif qui est agencé en amont du tronçon actif amont, l'au moins un dispositif de marquage étant agencé le long dudit tronçon passif ;
- le trajet de chauffage comporte au moins un tronçon passif qui est agencé en aval du tronçon actif aval, l'au moins un dispositif de marquage étant agencé le long dudit tronçon passif.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig. 1] La figure 1 est une vue de dessus qui représente schématiquement une installation de fabrication de récipients à partir de préformes ;
[Fig. 2] La figure 2 est une vue de profil qui représente une préforme destinée à être prise en charge par l'installation de la figure 1 ;
[Fig. 3] La figure 3 est une vue de détail à plus grande échelle qui représente schématiquement une station de chauffage appartenant à l'installation de fabrication de la figure 1, la station de chauffage étant apte à mettre en oeuvre un procédé d'indexation angulaire selon l'invention ;
[Fig. 4] La figure 4 est une vue en coupe selon le plan de coupe 4-4 de la figure 3 qui représente une portion d'une chaîne de transport de préformes à travers la station de chauffage ;
[Fig. 5] La figure 5 est une vue en coupe selon le plan de coupe 5-5 de la figure 3 qui représente une préforme subissant une opération de marquage au moyen d'un dispositif de marquage réalisé selon un premier mode de réalisation de l'invention ;
[Fig. 6] La figure 6 est une vue similaire à celle de la figure 5 qui représente le dispositif de marquage réalisé selon un deuxième mode de réalisation de l'invention ;
[Fig. 7] La figure 7 est une vue en coupe selon le plan de coupe 7-7 de la figure 5 qui représente un maneton d'une tournette engagé entre deux doigt d'un dispositif d'orientation ;
[Fig. 8] La figure 8 est une vue en perspective qui représente le col d'une préforme ayant subi quatre opérations de marquage durant la mise en oeuvre du procédé selon l'invention dans la station de chauffage de la figure 3 ;
[Fig. 9] La figure 9 est un schéma-bloc qui représente le procédé d'indexation réalisé selon les enseignements de l'invention.

### Description détaillée de l'invention

Dans la suite de la description des éléments présentant une structure identique ou des fonctions analogues seront désignés par une même référence.

Dans la suite de la description, on utilisera les termes "amont" et "aval" en référence au sens de déplacement des préformes le long d'un trajet de production.

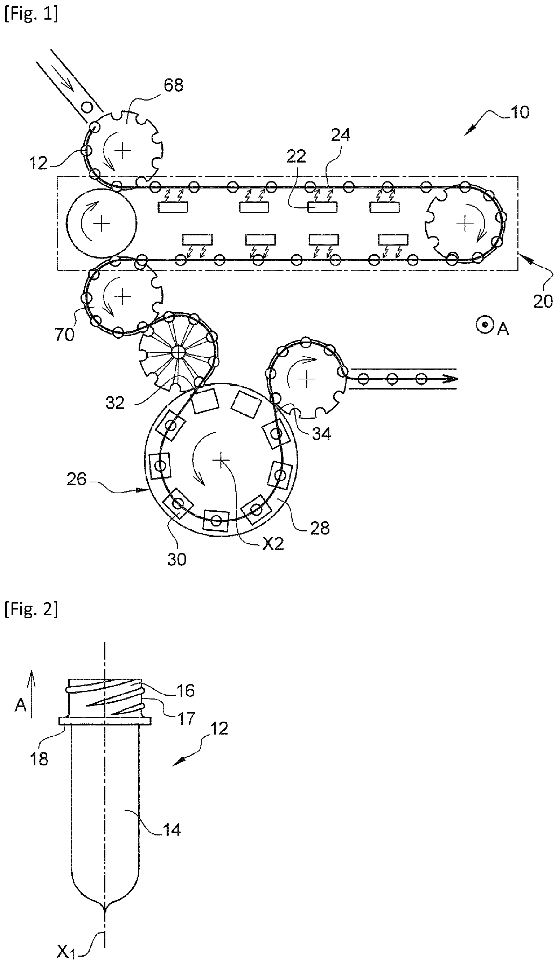

On a représenté schématiquement à la figure 1 une installation 10 de fabrication en série de récipients en matériau thermoplastique à partir de préformes 12. De manière non limitative, les récipients sont ici des bouteilles. Le matériau thermoplastique est ici formé par du polyéthylène téréphtalate, désigné par la suite sous son acronyme "PET".

On a représenté à la figure 2 un exemple de préforme 12. Une telle préforme 12 est réalisée en matériau thermoplastique, ici en polyéthylène téréphtalate (PET). Elle présente un axe "X1" principal représenté verticalement à la figure 2. Elle comporte un corps 14 présentant une extrémité axiale fermée, représenté en bas à la figure 2. Le corps 14 débouche par son extrémité opposée, représentée en haut à la figure 2, dans un col 16 ouvert.

Le col 16 présente une forme tubulaire dont l'axe principal définit l'axe "X1" principal de la préforme 12.

Le corps 14 présente généralement une forme axisymétrique de tube allongé selon l'axe "X1" principal. Le col 16 de la préforme comporte aussi une collerette 18 annulaire qui fait saillie radialement.

Le col 16, y compris la collerette 18, est délimité vers l'extérieur par une face 17 externe.

Une portion de la face 17 externe du col 16 présente une forme globalement cylindrique. Elle comporte généralement des moyens de fixation d'un bouchon, par exemple un filet ou une gorge pour l'emboîtement élastique du bouchon.

En se reportant à la figure 1, l'installation 10 comporte une station 20 de chauffage des préformes 12. A titre d'exemple non limitatif, la station 20 de chauffage est formée par un tunnel dans lequel sont agencés des organes 22 de chauffage émettant un rayonnement électromagnétique chauffant, par exemple un rayonnement infrarouge, tels que des lampes halogènes ou des émetteurs laser.

Comme cela sera expliqué plus en détails par la suite, un dispositif 24 de transport des préformes 12 est agencé de manière à les faire défiler le long des organes 22 de chauffage depuis une entrée jusqu'à une sortie du tunnel. Le sens de défilement des corps creux est indiqué par les flèches de la figure 1.

A leur sortie de la station 20 de chauffage, le corps 14 des préforme 12 est rendu malléable par chauffage au-delà d'une température de transition vitreuse, tandis que le col 16 est maintenu à une température suffisamment basse pour conserver sa forme d'origine.

L'installation 10 comporte aussi une station 26 de formage des préforme 12 ainsi chauffés. La station 26 de formage est agencée en aval de la station 20 de chauffage en référence au flux de préforme 12 dans l'installation 10.

La station 26 de formage comporte ici un carrousel 28 portant une pluralité de postes 30 de formage. Le carrousel est monté rotatif autour d'un axe "X2" central. Chaque poste 30 de formage est ainsi susceptible de se déplacer autour de l'axe "X2" du carrousel 28 entre un point 32 de chargement des préforme 12 sous forme de préformes chaudes et un point 34 de déchargement des préforme 12 sous forme de récipients finaux avant de reprendre un nouveau cycle. Chaque poste 30 de formage comporte notamment un moule (non représenté) muni d'une empreinte de moulage du récipient final.

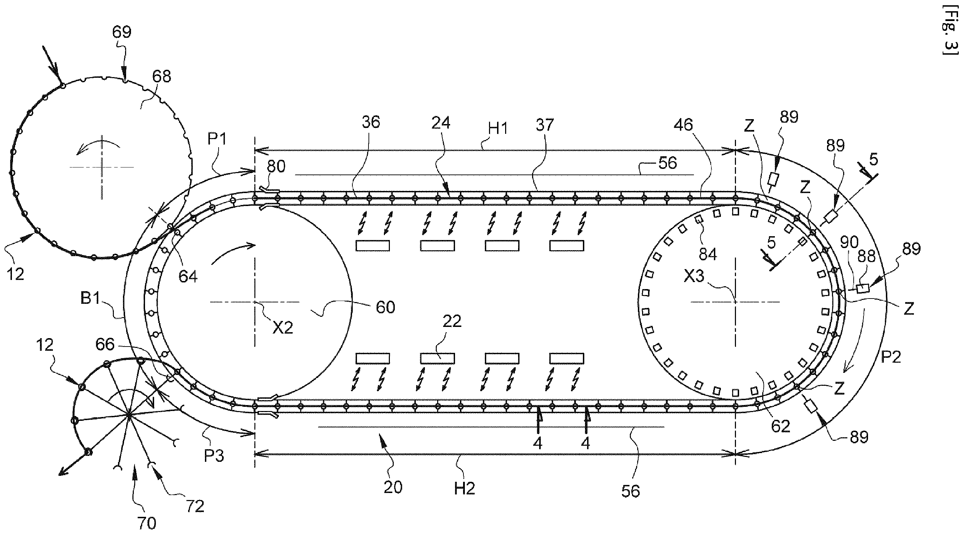

En se reportant à la figure 3, on a représenté plus en détails la station 20 de chauffage. Le dispositif 24 de transport permet de déplacer les préformes 12 en file le long d'un trajet 36 de chauffage qui est indiqué en gras à la figure 3.

Le dispositif 24 de transport comporte une chaîne 37 d'organes de support, par la suite appelés "tournettes 38", dont chacun est apte à supporter individuellement une préforme 12.

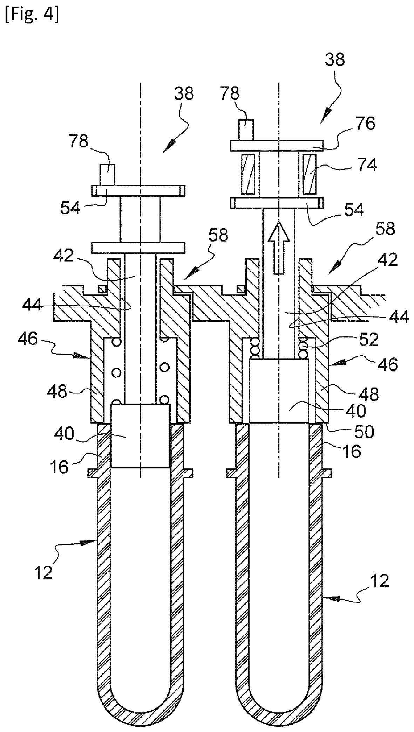

Comme représenté à la figure 4, une telle tournette 38 comporte classiquement un mandrin 40 qui est ici emmanché dans le col 16 d'une préforme 12. Le mandrin 40 est par exemple enfoncé à force dans le col 16 de la préforme 12 qui est ainsi temporairement solidarisée avec le mandrin 40 par frottement. Le frottement nécessaire est par exemple fourni par une bague en matériau élastomère (non représentée) qui est disposée dans une gorge autour du mandrin 40.

Le mandrin 40 est fixé à l'extrémité inférieure d'un arbre 42 d'axe coaxial à celui de la préforme 12 portée. L'arbre 42 est reçu dans un palier 44 de guidage d'un maillon 46 du dispositif 24 de transport. L'arbre 42 est plus particulièrement monté rotatif dans le palier 44 de guidage autour de son axe "X1" principal. Cette rotation permet avantageusement de pouvoir exposer de manière maîtriser la totalité du corps 14 de la préforme 12 au rayonnement chauffant émis par les organes 22 de chauffage.

En outre, l'arbre 42 est ici monté coulissant axialement par rapport au maillon 46. Le maillon 46 comporte un manchon 48 inférieur qui présente une face 50 annulaire d'extrémité inférieure dite "face 50 de dévêtissage". L'arbre 42 est ainsi monté coulissant entre une position inférieure active, comme représenté à gauche sur la figure 4, dans laquelle le mandrin 40 est susceptible d'être emmanché dans un col 16 de préforme 12, et une position supérieure inactive, comme représenté à droite à la figure 4, dans laquelle le mandrin 40 est rétracté dans le manchon 48, au-dessus de la face 50 de dévêtissage, pour permettre l'extraction du mandrin 40 du col 16 de la préforme qui reste bloquée à l'extérieur du manchon 48 par butée contre la face 50 de dévêtissage.

En général, le mandrin 40 est commandé vers sa position inactive au moyen d'un dispositif à came (non représenté), tandis qu'il est sollicité vers sa position active par un organe 52 élastique, ici un ressort, qui est interposé axialement entre le mandrin 40 et le maillon 46.

La rotation du mandrin 40 autour de l'axe "X1" principal de la préforme 12 est ici commandée au moyen d'un pignon 54 qui est ici agencé à une extrémité supérieure de l'arbre 42, au-dessus du maillon 46. Le pignon 54 est destiné à coopérer avec une crémaillère 56 qui est disposée sur au moins un tronçon du trajet des préformes 12 dans le four.

En variante non représentée de l'invention, la rotation du mandrin 40 est commandée par un moteur électrique individuel qui est embarqué sur le maillon 46. La rotation est alors commandée par une unité électronique de commande.

Chaque maillon 46 porte ici une seule tournette 38. En variante, un maillon peut porter deux tournettes. Les maillons 46 sont montés articulés en chaîne les uns aux autres autour de l'axe "X1" vertical par l'intermédiaire d'une charnière 58. Les maillons 46 sont ainsi assemblés pour former la chaîne 37 fermée.

La chaîne 37 est engrenée autour d'une première roue 60 de guidage et d'une deuxième roue 62 de guidage qui sont chacune montées rotatives autour d'axes "X2, X3" verticaux. Au moins l'une des roues 60, 62 de guidage est entraînée, ici dans un sens horaire, par un moteur (non représenté).

Chaque tournette 38 est ici déplacé en continu, c'est-à-dire sans interruption, le long d'un circuit fermé. La réalisation d'un tour complet du circuit fermé par une tournette 38 sera appelé un "cycle" par la suite.

Une section utile, représentée en trait gras à la figure 1, dudit circuit fermé forme un trajet de traitement le long duquel chaque tournette 38 est destinée à embarquer une préforme 12, tandis qu'une autre section à vide, que les tournettes 38 parcourent à vide, complète le circuit.

Sur la section utile, chaque tournette 38 transporte une préforme depuis un point 64 de prise en charge des préformes 12 jusqu'à un point 66 de transfert des préformes 12 vers la station 26 de soufflage. Le point 64 de prise en charge et le point 66 de transfert sont agencés en périphérie de la première roue 60 de guidage.

Les préformes 12 sont acheminées une par une jusqu'au point 64 de prise en charge, par exemple au moyen d'une roue 68 à encoches. Au point 64 de prise en charge, chaque mandrin 40 est emmanché dans le col 16 d'une préforme 12 acheminée par la roue 68 à encoches. La roue 68 à encoches est munie d'encoches 69 à sa périphérie dont chacune est destinée à supporter une préforme 12.

A l'issue du trajet de traitement, les préformes 12 chaudes sont transférées à une roue 70 de transfert qui est ici équipée de pinces 72 qui sont destinées à saisir chaque préforme 12 par leur col 16. Les tournettes 38 sont alors commandées vers leur position inactive au moyen d'une fourchette 74 de commande qui est ici portée par la première roue 60 de guidage. La première roue 60 de guidage comporte plus particulièrement plusieurs fourchettes 74 à sa périphérie. Une gorge 76 de chaque tournette 38 est destinée à être en prise avec une fourchette 74 pour commander son coulissement, comme illustré à la figure 4.

Sur la section à vide, les tournettes 38 se déplacent à vide depuis le point 66 de transfert jusqu'au point 64 de prise en charge. La section à vide est agencée sur un brin "B1" de la chaîne 37 qui est engrenée autour de la première roue 60 de guidage.

Le trajet de chauffage comporte au moins un tronçon actif le long duquel le corps 14 de la préforme 12 est exposé directement au rayonnement chauffant des organes 22 de chauffage et au moins un tronçon passif le long duquel le corps 14 de la préforme 12 n'est pas exposé au rayonnement chauffant des organes 22 de chauffage.

Dans l'exemple illustré aux figures, la station 20 de chauffage comporte un tronçon "H1" actif amont et un tronçon "H2" actif aval qui sont formés par deux brins rectilignes de la chaîne 37 de transport tendue entre les deux roues 60, 62 de guidage. Les organes 22 de chauffage sont agencés le long de ces deux tronçons "H1, H2" actifs de manière que le corps 14 des préformes 12 parcourant ces tronçons "H1, H2" actifs soient exposés au rayonnement chauffant. Les préformes 12 sont généralement entraînées en rotation autour de leur axe "X1" lorsqu'elles parcourent les tronçons "H1, H2" actifs de chauffage pour permettre de chauffer le corps 14 des préformes 12 sur toute leur circonférence. A cet effet, chaque tronçon "H1 "H2" comporte une crémaillère 56 associée pour l'entraînement en rotation des tournettes 38.

L'orientation de chaque tournette 38 est maîtrisée pendant tout le trajet de chauffage. Dans le mode de réalisation représenté aux figures, notamment à la figure 4, chaque tournette comporte ici un maneton 78 qui est agencé de manière excentré par rapport à l'axe "X1" de rotation. Le maneton 78 est destiné à permettre d'orienter correctement la tournette 38 en début de trajet de chauffage en passant entre un jeu 80 de deux rampes convergentes disposées le long du trajet des tournettes 38. Le maneton 78 est ainsi positionné automatiquement vers l'amont par rapport au sens de déplacement des tournettes 38. A la sortie de ce jeu 80 de rampes convergentes, les pignons 54 engrènent directement avec la crémaillère 56 de sorte que l'orientation des tournettes 38 peut se déduire aisément de sa position le long du trajet de chauffage tant que le pignon 54 est en prise avec la crémaillère 56.

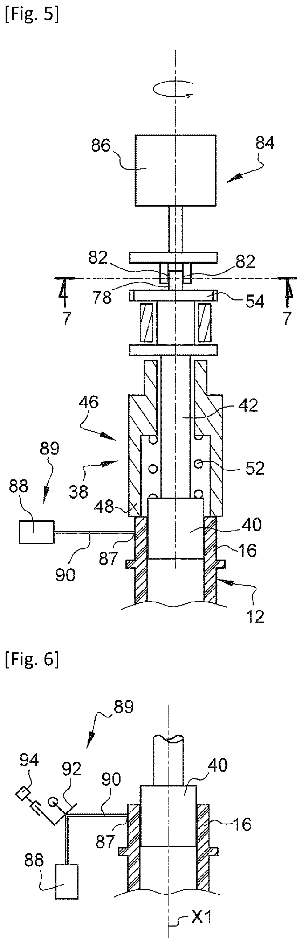

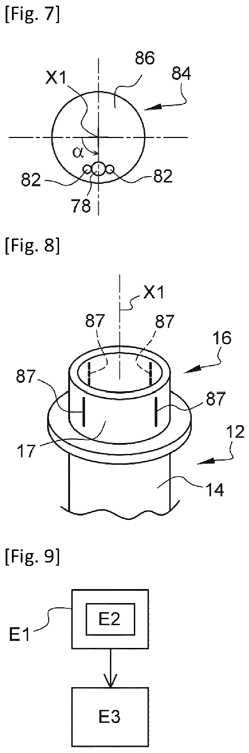

Lorsque les tournettes 38 arrivent au niveau de la deuxième roue 62 de guidage, le maneton 78 est reçu entre deux doigts 82 d'un dispositif 84 d'orientation. Le dispositif 84 d'orientation comporte aussi un moteur 86 qui permet de faire tourner les doigts 82 autour de l'axe "X1" pour pouvoir orienter les tournettes 38 autour de leurs axes "X1", comme cela est illustré aux figures 5 et 7. La deuxième roue 62 de guidage comporte ainsi plusieurs dispositifs 84 d'orientation qui sont agencés à la périphérie de manière que chaque tournette 38 soit prise en charge par un dispositif 84 d'orientation entre les deux crémaillères 56.

En variante non représentée de l'invention, les crémaillères et/ou les dispositifs d'orientation peuvent être remplacés par un moteur individuel d'entraînement en rotation de la tournette qui est porté par chaque maillon.

Des organes (non représentés) de protection sont prévus pour protéger le col 16 des préformes 12 du rayonnement chauffant afin de maintenir le col 16 à une température inférieure à la température de transition vitreuse.

Le trajet de chauffage comporte ici trois tronçons passifs le long duquel le corps 14 des préformes 12 n'est pas exposé au rayonnement chauffant émis par les organes 22 de chauffage. Un premier tronçon "P1" passif amont est agencé entre le point 64 de prise en charge et le tronçon "H1" actif amont. Un deuxième tronçon "P2" passif intermédiaire est intercalé entre le tronçon "H1" actif amont et le tronçon "H2" actif aval. Le deuxième tronçon "P2" passif intermédiaire présente plus particulièrement une forme en arc de cercle, car il s'étend sur un brin de la chaîne 37 qui est engrené autour de la deuxième roue 62 de guidage. Le troisième tronçon "P3" passif aval est agencé entre l'extrémité aval du tronçon "H2" actif aval et le point 66 de transfert. Aucun organe de chauffage n'est ici agencé le long des tronçons passifs. De manière connue, lorsque l'installation 10 fonctionne dans un mode de production des récipients, chaque préforme 12 subit une étape "E1" de prise en charge par la station 20 de chauffage. Cette étape "E1" de prise en charge débute lorsque la préforme 12 est prise en charge par une tournette 38 au point 64 de prise en charge, et elle se termine lorsque la préforme 12 est transférée à la roue 70 de transfert au point 66 de transfert. Ainsi, pendant toute cette étape "E1" de prise en charge, chaque préforme 12 est transportée le long du trajet de chauffage par une tournette 38 associée. Pendant cette étape "E1", le corps 14 de la préforme 12 est chauffé pendant que la préforme 12 parcourt les tronçons "H1, H2" actifs du trajet de chauffage.

Le paramétrage de chaque organe 22 de chauffage est susceptible d'être commandé pour chauffer plus ou moins certaines portions du corps 14 de la préforme 12. Les paramètres susceptibles d'être réglés comprennent par exemple la position des organes 22 de chauffage par rapport au trajet de chauffage et/ou la puissance du rayonnement émis par les organes 22 de chauffage. Les paramètres sont par exemple commandés automatiquement par une unité électronique de commande. Ainsi, en maîtrisant simultanément l'orientation de la tournette 38 et la puissance du rayonnement chauffant en tout point du trajet de chauffage, il est possible d'effectuer un chauffage du corps 14 de la préforme 12 selon un profil de chauffe dit "préférentiel" qui permet ensuite de conférer au récipient final une forme non axisymétrique pendant l'opération de formage.

Comme expliqué en préambule, dans certaines applications il est nécessaire d'orienter la préforme 12 et/ou le récipient final avant la réalisation d'un traitement. Par exemple, une préforme 12 chauffée selon un profil de chauffe "préférentiel" devra être orientée en correspondance avec la forme de l'empreinte du moule dans le poste 30 de formage. A cet effet, il est connu de réaliser un repère 87 sur le col 16 de la préforme 12, car le col 16 ne subit aucune transformation.

L'invention concerne un procédé d'indexation angulaire comportant une étape "E2" de marquage qui consiste à réaliser au moins un repère 87 sur le col 16 de la préforme 12.

Selon les enseignements de l'invention, l'étape "E2" de marquage est réalisée pendant l'étape "E1" de prise en charge, pendant que la préforme 12, portée par une tournette 38, parcourt le trajet de chauffage, comme illustré à la figure 9. Plus précisément, l'étape "E2" de marquage est déclenchée après le début de l'étape "E1" de prise en charge, et elle est achevée avant la fin de l'étape "E1" de prise en charge. Ce procédé permet avantageusement de ne pas avoir à se soucier de l'orientation des préformes lors de leur prise en charge par la station 20 de chauffage.

L'étape "E2" de marquage est ici réalisée par une opération de réalisation d'un repère 87 qui consiste à exposer une zone angulaire déterminée de la face 17 externe du col 16 à un rayon laser suffisamment puissant pour marquer localement le col 16 de la préforme 12. Le rayon laser est focalisé sur une portion très petite du col 16 par rapport à ses dimensions. Le matériau thermoplastique exposé au rayon laser provoquant alors localement l'apparition d'un repère 87 visuel par modification de la structure de la matière.

A cet effet, la station 20 de chauffage est équipée d'au moins un dispositif 89 de marquage. Le dispositif 89 de marquage est par exemple agencé de manière fixe par rapport au sol, en vis-à-vis du trajet de chauffage.

Le dispositif 89 de marquage comporte ici un émetteur 88 laser qui est susceptible d'émettre un faisceau 90 laser en direction du col 16 d'un préforme 12 portée par une tournette 38. Le faisceau 90 laser est de préférence émis sensiblement orthogonalement à la face 17 externe du col 16.

En variante, la station 20 de chauffage comporte une pluralité d'émetteurs 88 laser qui sont portés par la deuxième roue 62 de guidage. Chaque émetteur 88 laser est alors associé à un dispositif 84 d'orientation.

L'émetteur 88 laser peut émettre directement le faisceau 90 laser vers le col 16 comme cela est illustré à la figure 5.

En variante, comme cela est illustré à la figure 6, le dispositif 89 de marquage comporte un miroir 92. L'émetteur 88 laser émet tout d'abord un faisceau 90 laser vers le miroir 92 qui réfléchit ensuite le faisceau 90 laser en direction du col 16. Ceci permet ainsi de déplacer facilement le faisceau 90 laser pour obtenir un repère 87 de la forme souhaitée en jouant uniquement sur l'orientation du miroir 92 sans modifier l'orientation de l'émetteur 88 laser, par exemple au moyen d'un moteur 94. Ceci permet par exemple d'obtenir un repère 87 formant une droit parallèle à l'axe "X1" de la préforme 12.

Selon une variante non représentée de l'invention, l'étape "E2" de marquage comporte au moins une opération de réalisation d'un repère qui consiste à imprimer le repère sur la face externe du col avec une substance marquante telle que de l'encre. A cet effet, le dispositif 89 de marquage est formé par une tête d'impression qui est agencée de manière à imprimer le repère 87 sur le col 16 d'une préforme 12 portée par une tournette 38.. Il peut s'agir d'une encre visible ou d'une encre invisible qui est susceptible d'être révélée par exposition à un rayonnement d'une longueur d'onde déterminée, tel qu'un rayonnement ultraviolet.

L'étape "E2" de marquage est par exemple réalisée lorsque la préforme 12 est située sur un tronçon "P1, P2, P3" passif du trajet de chauffage. Cela permet d'une part de bénéficier de plus d'espace pour agencer le dispositif 89 de marquage, mais aussi d'éviter de soumettre le dispositif 89 de marquage à un chauffage trop intense. A cet égard, le dispositif 89 de marquage est agencé le long d'un des tronçons "P1, P2, P3" passifs.

Avantageusement, pour pouvoir commander librement l'orientation de la préforme 12 pendant l'opération de marquage, le dispositif 89 de marquage est agencé le long du deuxième tronçon "P2" passif. Ainsi, l'orientation des préformes 12 peut être commandée au moyen du dispositif 84 d'orientation qui est lui-même piloté par une unité électronique de commande (non représentée).

Cependant, l'opération de marquage peut aussi avoir lieu dans le premier tronçon "P1" passif ou dans le troisième tronçon "P3" passif lorsque l'orientation des préformes 12 peut y être commandée, par exemple au moyen d'un moteur individuel. En ce cas, au moins un dispositif 89 de marquage est agencé le long du premier et/ou du troisième tronçon "P1, P3" passif. Les dispositifs 89 de marquage sont commandés automatiquement par une unité électronique de commande pour procéder à une opération de réalisation d'un repère 87 sur le col 16 d'une préforme 12 lorsque la préforme 12 arrive dans une zone "Z" de marquage située en vis-à-vis du dispositif 89 de marquage.

Bien que l'opération de marquage au moyen d'un faisceau 90 laser ou au moyen d'une tête d'impression soit très rapide, la rotation de la préforme 12 autour de son axe "X1" peut être interrompue pendant l'opération afin de permettre un marquage plus précis de la préforme 12. En revanche, le déplacement des préformes 12 le long de leur trajet de chauffage se poursuit bien entendu à vitesse constante.

En variante, l'opération de marquage est réalisée pendant que la préforme 12 est en rotation autour de son axe "X1".

L'étape "E2" de marquage comporte au moins deux opérations de réalisation de repères en au moins deux zones angulaires distinctes du col 16. De manière générale, l'étape "E2" de marquage comporte autant d'opérations de réalisation de repères que le nombre de repères 87 requis pour marquer le col 16 de la préforme 12.

Dans l'exemple représenté à la figure 3, l'étape "E2" de marquage comporte quatre opérations de réalisation d'un repère de manière que le col 16 de la préforme présente quatre repères 87 en arrivant au point 66 de transfert, comme illustré à la figure 8. Chaque opération de réalisation d'un repère est ici mise en oeuvre par un dispositif 89 de marquage associé, comme cela est illustré à la figure 3. Tous les dispositifs 89 de marquage sont identiques. Ils sont ici répartis le long du deuxième tronçon "P2" passif.

Pour permettre de réaliser chaque repère 87 sur un secteur angulaire différent du col 16, la tournette 38 est pivotée autour de son axe "X1" par le dispositif 84 d'orientation associé de la deuxième roue 62 de guidage afin que le col 16 présente le secteur angulaire voulu de sa face 17 externe en arrivant en vis-à-vis de chacun des dispositifs 89 de marquage. Dans l'exemple représenté à la figure 7, la tournette 38 est pivotée d'un angle α qui est ici égal à 90° entre chaque dispositif 89 de marquage. Ainsi, le col 16 comporte, à l'issue de l'étape "E2" de marquage, quatre repères 87 qui sont agencés à 90° les uns des autres autour de l'axe "X1".

L'orientation de la tournette 38, et par conséquence de la préforme 12 portée par ladite tournette 38, étant maîtrisée tout au long du trajet de chauffage, les repères 87 sont positionnés précisément par rapport au profil de chauffe de la préforme 12. Le risque d'erreur de positionnement des repères par rapport au profil de chauffe de la préforme 12 est ainsi fortement réduit au regard des procédés de marquage de l'état de la technique.

La préforme 12 ainsi marquée grâce au procédé de l'invention poursuit ainsi son cheminement jusqu'à la station 26 de formage. Lors d'une étape "E3" d'installation de la préforme 12 chaude dans un moule de formage, à l'issue de l'étape "E1" de prise en charge par la station 20 de chauffage, la préforme 12 est orientée dans une position angulaire de référence par rapport au moule à l'aide des repères 87 réalisés pendant l'étape "E2" de marquage. Selon un exemple non limitatif, la préforme 12 orientée dans le moule au moyen d'une tuyère rotative telle que décrite dans le document FR 2.764.544. La position angulaire de la préforme 12 par rapport au moule peut être définie précisément, par exemple au moyen d'un dispositif de prise d'images qui prend une image du col. L'image peut ensuite être analysée par un logiciel de traitement d'image qui permettra de déterminer précisément l'angle de rotation nécessaire pour amener la préforme 12 dans sa position angulaire de référence par rapport au moule.

## Revendications

1. Procédé d'indexation angulaire d'une préforme (12) qui comporte un corps (14) et un col (16), le procédé comportant :
- une étape (E2) de marquage du col (16) de la préforme (12) pendant laquelle on réalise au moins un repère (87) sur le col (16) de la préforme (12) ;
- une étape (E1) de prise en charge de la préforme (12) par une station (20) de chauffage, pendant laquelle la préforme (12) est transportée le long d'un trajet de chauffage par un organe de support, appelé tournette (38), qui permet de faire tourner la préforme (12) autour de son axe (X1), et pendant laquelle le corps (14) de la préforme est chauffé ;
**caractérisé en ce que** l'étape (E2) de marquage est réalisée pendant l'étape (E1) de prise en charge, lorsque la préforme (12), portée par une tournette (38), parcourt le trajet de chauffage.

2. Procédé selon la revendication précédente, **caractérisé en ce que** le trajet de chauffage comporte au moins un tronçon (H1, H2) actif le long duquel le corps (14) de la préforme (12) est exposé directement à un rayonnement chauffant et au moins un tronçon (P1, P2, P3) passif le long duquel le corps (14) de la préforme (12) n'est pas exposé à un rayonnement chauffant, l'étape (E2) de marquage étant réalisée lorsque la préforme (12) est située sur le tronçon (P1, P2, P3) passif.

3. Procédé selon l'une quelconque des revendications précédentes, **caractérisé en ce que** l'étape (E2) de marquage comporte au moins une opération de réalisation d'un repère (87) pendant laquelle on expose une zone angulaire déterminée d'une face (17) externe du col (16) à un faisceau (90) laser suffisamment puissant pour marquer localement le col (16) de la préforme (12).

4. Procédé selon l'une quelconque des revendications 1 à 2, **caractérisé en ce que** l'étape (E2) de marquage comporte au moins une opération de réalisation d'un repère (87) pendant laquelle on imprime le repère (87) sur une face (17) externe du col (16) avec une substance marquante, telle que de l'encre.

5. Procédé selon l'une quelconque des revendications 3 ou 4, **caractérisé en ce que** la rotation de la préforme (12) autour de son axe (X1) est interrompue pendant chaque opération de marquage.

6. Procédé selon l'une quelconque des revendications 3 ou 4, **caractérisé en ce que** l'opération de marquage est réalisée pendant que la préforme (12) est en rotation autour de son axe (X1).

7. Procédé selon l'une quelconque des revendications 3 à 6, **caractérisé en ce que** l'étape (E2) de marquage comporte au moins deux opérations de réalisation de repères (87) en deux zones angulaires distinctes du col (16).

8. Procédé selon l'une quelconque des revendications précédentes, **caractérisé en ce qu'**il comporte une étape (E3) d'installation de la préforme (12) chaude dans un moule de formage à l'issue de l'étape (E1) de prise en charge par la station (20) de chauffage, la préforme (12) étant orientée dans une position angulaire de référence par rapport au moule à l'aide des repères (87) réalisés pendant l'étape (E2) de marquage.

9. Station (20) de chauffage pour la mise en oeuvre du procédé selon l'une quelconque des revendications précédentes, la station (20) de chauffage comportant :
- un dispositif (24) de transport de préformes (12) comportant une chaîne (37) de tournettes (38) pour déplacer les préformes (12) le long d'un trajet de chauffage ;
- des organes (22) de chauffage des préformes (12) qui sont agencés le long d'au moins un premier tronçon (H1) actif amont du trajet de chauffage, au moins un tronçon passif (P1, P2, P3) du trajet de chauffage n'étant pas exposé à des organes (22) de chauffage ;
**caractérisée en ce que** la station (20) de chauffage comporte au moins un dispositif (89) de marquage qui est agencé le long de l'au moins un tronçon (P1, P2, P3) passif.

10. Station (20) de chauffage selon la revendication précédente, **caractérisée en ce que** le dispositif (89) de marquage comporte un émetteur (88) laser et qui est agencé de manière à émettre un faisceau (90) laser en direction du col (16) d'une préforme (12) portée par une tournette (38) située sur l'au moins un tronçon (P1, P2, P3) passif.

11. Station (20) de chauffage selon la revendication 9, **caractérisée en ce que** le dispositif (89) de marquage comporte une tête d'impression qui est agencée de manière à imprimer le repère (87) sur le col (16) d'une préforme (12) portée par une tournette (38) située sur l'au moins un tronçon (P1, P2, P3) passif.

12. Station (20) de chauffage selon l'une quelconque des revendications 9 à 11, **caractérisée en ce que** le trajet de chauffage comporte un deuxième tronçon (H2) actif aval, au moins un tronçon (P2) passif étant interposé entre les deux tronçons (H1, H2) actifs, l'au moins un dispositif (89) de marquage étant agencé le long dudit tronçon (P2) passif.

13. Station de chauffage selon l'une quelconque des revendications 9 à 12, **caractérisée en ce que** le trajet de chauffage comporte au moins un tronçon (P1) passif qui est agencé en amont du tronçon (H1) actif amont, l'au moins un dispositif (89) de marquage étant agencé le long dudit tronçon (P1) passif.

14. Station de chauffage selon l'une quelconque des revendications 9 à 13, **caractérisée en ce que** le trajet de chauffage comporte au moins un tronçon (P3) passif qui est agencé en aval du tronçon (H2) actif aval, l'au moins un dispositif (89) de marquage étant agencé le long dudit tronçon (P3) passif.

## Patentansprüche

1. Verfahren zur Winkelindexierung einer Vorform (12), die einen Körper (14) und einen Hals (16) umfasst, wobei das Verfahren Folgendes umfasst:
- einen Schritt (E2) des Markierens des Halses (16) der Vorform (12), während dessen mindestens ein Bezugszeichen (87) an dem Hals (16) der Vorform (12) angebracht wird;
- einen Schritt (E1) der Aufnahme der Vorform (12) durch eine Heizstation (20), während dessen die Vorform (12) durch ein Trägerelement, das als Dreheinrichtung (38) bezeichnet wird und ermöglicht, die Vorform (12) um ihre Achse (X1) zu drehen, entlang eines Heizpfads transportiert wird;
**dadurch gekennzeichnet, dass** der Schritt (E2) des Markierens während des Schritts (E1) der Aufnahme durchgeführt wird, wenn die Vorform (12) von einer Dreheinrichtung (38) getragen wird.

2. Verfahren nach dem vorhergehenden Anspruch, **dadurch gekennzeichnet, dass** der Heizpfad mindestens einen aktiven Abschnitt (H1, H2), entlang dessen der Körper (14) der Vorform (12) einer Heizstrahlung direkt ausgesetzt ist, und mindestens einen passiven Abschnitt (P1, P2, P3), entlang dessen der Körper (14) der Vorform (12) keiner Heizstrahlung ausgesetzt ist, umfasst, wobei der Schritt (E2) des Markierens durchgeführt wird, wenn sich die Vorform (12) in dem passiven Abschnitt (P1, P2, P3) befindet.

3. Verfahren nach einem beliebigen der vorhergehenden Ansprüche, **dadurch gekennzeichnet, dass** der Schritt (E2) des Markierens mindestens einen Vorgang des Anbringens eines Bezugszeichens (87) umfasst, während dessen ein bestimmter Winkelbereich einer Außenfläche (17) des Halses (16) einem Laserstrahl (90) ausgesetzt wird, der leistungsstark genug ist, um den Hals (16) der Vorform (12) lokal zu markieren.

4. Verfahren nach einem beliebigen der Ansprüche 1 bis 2, **dadurch gekennzeichnet, dass** der Schritt (E2) des Markierens mindestens einen Vorgang des Anbringens eines Bezugszeichens (87) umfasst, während dessen das Bezugszeichen (87) mit einer Markierungssubstanz, wie etwa Tinte, auf eine Außenfläche (17) des Halses (16) aufgedruckt wird.

5. Verfahren nach einem beliebigen der Ansprüche 3 oder 4, **dadurch gekennzeichnet, dass** die Drehung der Vorform (12) um ihre Achse (X1) während jedes Markierungsvorgangs unterbrochen wird.

6. Verfahren nach einem beliebigen der Ansprüche 3 oder 4, **dadurch gekennzeichnet, dass** der Markierungsvorgang durchgeführt wird, während sich die Vorform (12) um ihre Achse (X1) dreht.

7. Verfahren nach einem beliebigen der Ansprüche 3 bis 6, **dadurch gekennzeichnet, dass** der Schritt (E2) des Markierens mindestens zwei Vorgänge des Anbringens von Bezugszeichen (87) in zwei unterschiedlichen Winkelbereichen des Halses (16) umfasst.

8. Verfahren nach einem beliebigen der vorhergehenden Ansprüche, **dadurch gekennzeichnet ist, dass** es im Anschluss an den Schritt (E1) der Aufnahme durch die Heizstation (20) einen Schritt (E3) des Installierens der heißen Vorform (12) in einem Formwerkzeug umfasst, wobei die Vorform (12) mit Hilfe der während des Schritts (E2) des Markierens angebrachten Bezugszeichen (87) in einer Winkelreferenzposition in Bezug auf das Werkzeug ausgerichtet wird.

9. Heizstation (20) zur Umsetzung des Verfahrens nach einem beliebigen der vorhergehenden Ansprüche, wobei die Heizstation (20) Folgendes umfasst:
- eine Vorrichtung (24) für den Transport von Vorformen (12), die eine Kette (37) von Dreheinrichtungen (38) umfasst, um die Vorformen (12) entlang eines Heizpfads zu bewegen;
- Elemente (22) zum Heizen der Vorformen (12), die entlang mindestens eines stromaufwärtigen ersten aktiven Abschnitts (H1) des Heizpfads eingerichtet sind, wobei mindestens ein passiver Abschnitt (P1, P2, P3) des Heizpfads keinen Heizelementen (22) ausgesetzt ist;
**dadurch gekennzeichnet, dass** die Heizstation (20) mindestens eine Markierungsvorrichtung (89) umfasst, die entlang des mindestens einen passiven Abschnitts (P1, P2, P3) eingerichtet ist.

10. Heizstation (20) nach dem vorhergehenden Anspruch, **dadurch gekennzeichnet, dass** die Markierungsvorrichtung (89) einen Laser-Emitter (88) umfasst, der so eingerichtet ist, dass er einen Laserstrahl (90) in Richtung des Halses (16) einer Vorform (12) emittiert, die durch eine Dreheinrichtung (38) getragen wird, die sich in dem mindestens einen passiven Abschnitt (P1, P2, P3) befindet.

11. Heizstation (20) nach Anspruch 9, **dadurch gekennzeichnet, dass** die Markierungsvorrichtung (89) einen Druckkopf umfasst, der so eingerichtet ist, dass er das Bezugszeichen (87) auf den Hals (16) einer Vorform (12) druckt, die durch eine Dreheinrichtung (38) getragen wird, die sich in dem mindestens einen passiven Abschnitt (P1, P2, P3) befindet.

12. Heizstation (20) nach einem beliebigen der Ansprüche 9 bis 11, **dadurch gekennzeichnet, dass** der Heizpfad einen stromabwärtigen zweiten aktiven Abschnitt (H2) umfasst, wobei mindestens ein passiver Abschnitt (P2) zwischen die zwei aktiven Abschnitte (H1, H2) eingefügt ist, wobei die mindestens eine Markierungsvorrichtung (89) entlang des passiven Abschnitts (P2) eingerichtet ist.

13. Heizstation nach einem beliebigen der Ansprüche 9 bis 12, **dadurch gekennzeichnet, dass** der Heizpfad mindestens einen passiven Abschnitt (P1) umfasst, der stromaufwärts des stromaufwärtigen aktiven Abschnitts (H1) eingerichtet ist, wobei die mindestens eine Markierungsvorrichtung (89) entlang des passiven Abschnitts (P1) eingerichtet ist.

14. Heizstation nach einem beliebigen der Ansprüche 9 bis 13, **dadurch gekennzeichnet, dass** der Heizpfad mindestens einen passiven Abschnitt (P3) umfasst, der stromabwärts des stromabwärtigen aktiven Abschnitts (H2) eingerichtet ist, wobei die mindestens eine Markierungsvorrichtung (89) entlang des passiven Abschnitts (P3) eingerichtet ist.

## Claims

1. Process for angular indexing of a pre-form (12) which comprises a body (14) and a neck (16), the process comprising:
- a step (E2) of marking the neck (16) of the pre-form (12) during which at least one reference point (87) is produced on the neck (16) of the pre-form (12);
- a step (E1) of a heating station (20) taking charge of the pre-form (12), during which the pre-form (12) is transported along a heating course by a support unit, known as a spinner (38), which makes it possible to turn the pre-form (12) around its axis (X1);
**characterized in that** the marking step (E2) is carried out during the step (E1) of taking charge, when the pre-form (12) is supported by a spinner (38).

2. Process according to the preceding claim, **characterized in that** the heating course comprises at least one active section (H1, H2) along which the body (14) of the pre-form (12) is exposed directly to heating radiation, and at least one passive section (P1, P2, P3) along which the body (14) of the pre-form (12) is not exposed to heating radiation, the marking step (E2) being carried out when the pre-form (12) is situated on the passive section (P1, P2, P3).

3. Process according to either of the preceding claims, **characterized in that** the marking step (E2) comprises at least one operation of production of a reference point (87), during which a determined angular area of an outer face (17) of the neck (16) is exposed to a laser beam (90) which is sufficiently powerful to mark the neck (16) of the pre-form (12) locally.

4. Process according to either one of Claims 1 to 2, **characterized in that** the marking step (E2) comprises at least one operation of production of a reference point (87), during which the reference point (87) is printed on an outer face (17) of the neck (16) with a marking substance, such as ink.

5. Process according to either one of Claims 3 and 4, **characterized in that** the rotation of the pre-form (12) around its axis (X1) is interrupted during each marking operation.

6. Process according to either one of Claims 3 and 4, **characterized in that** the marking operation is carried out while the pre-form (12) is rotating around its axis (X1).

7. Process according to any one of Claims 3 to 6, **characterized in that** the marking step (E2) comprises at least two operations of production of reference points (87) in two distinct angular areas of the neck (16).

8. Process according to any one of the preceding claims, **characterized in that** it comprises a step (E3) of installation of the hot pre-form (12) in a forming mold upon completion of the step (E1) of the heating station (20) taking charge of the pre-form, the pre-form (12) being oriented in an angular reference position relative to the mold by means of the reference points (87) produced during the marking step (E2).

9. Heating station (20) for implementation of the process according to any one of the preceding claims, the heating station (20) comprising:
- a device (24) for transport of pre-forms (12) comprising a chain (37) of spinners (38) in order to displace the pre-forms (12) along a heating course;
- units (22) for heating of the pre-forms (12) which are arranged along at least a first active section (H1) upstream from the heating course, at least one passive section (P1, P2, P3) of the heating course not being exposed to heating units (22),
**characterized in that** the heating station (20) comprises at least one marking device (89) which is arranged along the at least one passive section (P1, P2, P3).

10. Heating station (20) according to the preceding claim, **characterized in that** the marking device (89) comprises a laser emitter (88) which is arranged such as to emit a laser beam (90) in the direction of the neck (16) of a pre-form (12) supported by a spinner (38) situated on the at least one passive section (P1, P2, P3) .

11. Heating station (20) according to Claim 9, **characterized in that** the marking device (89) comprises a print head which is arranged such as to print the reference point (87) on the neck (16) of a pre-form (12) supported by a spinner (38) situated on the at least one passive section (P1, P2, P3).

12. Heating station (20) according to any one of Claims 9 to 11, **characterized in that** the heating course comprises a second downstream active section (H2), at least one passive section (P2) being interposed between the two active sections (H1, H2), the at least one marking device (89) being arranged along said passive section (P2) .

13. Heating station according to any one of Claims 9 to 12, **characterized in that** the heating course comprises at least one passive section (P1) which is arranged upstream from the upstream active section (H1), the at least one marking device (89) being arranged along said passive section (P1).

14. Heating station according to any one of Claims 9 to 13, **characterized in that** the heating course comprises at least one passive section (P3) which is arranged downstream from the downstream active section (H2), the at least one marking device (89) being arranged along said passive section (P3).
